# EUROPEAN PATENT APPLICATION

(11) **EP 1 538 311 A1**
(43) Date of publication of application: **08.06.2005**
(21) Application number: 04105279.6
(22) Date of filing: 25.10.2004
(51) Int. Cl.: F01N 3/08, F01N 9/00, F01N 11/00

(54) **Exhaust gas purifying method and exhaust gas purifying system**

(30) Priority: 21.11.2003 JP 2003392528
(71) Applicant: Isuzu Motors Limited, Tokyo 140-8524 (JP)
(72) Inventor: Nagaoka, Daiji c/o Isuzu Motors Limited, Kanagawa, Kanagawa (JP); Gabe, Masashi c/o Isuzu Motors Limited, Kanagawa, Kanagawa (JP)
(74) Representative: Weber, Dieter, Dr.

(57) **Abstract**

In an exhaust gas purifying system (1) for applying NOx purification by a NOx occlusion reduction type catalyst (42) and PM purification by a DPF (41) to the exhaust gas of an internal combustion engine, when it is judged that both regeneration of the DPF (41) and sulfur purge of the NOx occlusion reduction type catalyst (42) are necessary, the DPF regeneration control for raising the temperature of the DPF (41) is performed and the sulfur purge control for decreasing the oxygen concentration of the exhaust gas flowing into the NOx occlusion reduction type catalyst (42) is intermittently repeated. Thereby, it is possible to efficiently purge the sulfur accumulated in the NOx occlusion reduction type catalyst while preventing deterioration of fuel efficiency and discharge of NOx, HC, and CO into atmospheric air.

## Description

### Background of the Invention

The present invention relates to an exhaust gas purifying method and an exhaust gas purifying system for purifying NOx by a NOx occlusion reduction type catalyst and purifying PM by a DPF.

Legal restriction on discharge quantities of particulate matter (hereafter referred to as PM) and NOx (nitrogen oxide) is enforced year by year together with legal restriction on discharge quantities of CO (carbon monoxide) and HC (carbon hydride). Thus, only improvement of an engine cannot manage a restriction value for the enforcement of the restriction. Therefore, techniques are adopted which reduces these matters discharged from an engine by mounting an exhaust gas control system.

A filter referred to as a diesel particulate filter (hereafter referred to as DPF) is developed for the PM and many NOx purifying catalysts are developed for NOx.

When purifying PM and NOx simultaneously, it is impossible to avoid the NOx flowing out by the DPF alone and to burn a soot component in PM by the NOx occlusion reduction type catalyst alone. Therefore, as disclosed in Japanese Patent Laid-Open No. 1997-53442, it is required to combine the catalyst with a DPF or integrate the NOx purifying ability of the NOx occlusion reduction type catalyst with the PM purifying ability of the DPF. Moreover, it is required to combine both in order to purify the NOx generated in the time of regeneration of the DPF.

This DPF frequently uses a wall-flow-type ceramic honeycomb structure mainly containing cordierite and silicon carbide. The wall-flow-type DPF is formed by having a plurality of cells (through-holes) divided by porous partitions. Moreover, the DPF is alternately closed like a checkered pattern at the exhaust gas inlet-side end and exhaust gas exit-side end. Furthermore, the exhaust gas passes through the porous partitions of the cells when it moves from a cell whose upstream side is opened and whose downstream side is closed to the next cell whose upstream side is closed and whose downstream side is opened. When the exhaust gas passes through the porous partitions, PM in the exhaust gas is caught in the partition portion and the exhaust gas is purified.

However, when the PM is accumulated in the porous partitions of the cells, clogging occurs. Therefore, the ventilation resistance increases, and the collection efficiency of the PM is deteriorated. Therefore, to remove the PM accumulated in the porous partitions of the DPF by burning, when it is judged that the quantity of the collected PM exceeds a predetermined accumulated quantity, the temperature of the DPF is raised to the PM combustion start temperature or higher to remove the PM by burning.

The method for raising the temperature of a DPF to remove PM by burning includes an exhaust gas temperature raising method by performing post injection in the control of injecting fuel into a cylinder, an exhaust gas temperature raising method by directly injecting hydrocarbon (HC) into an exhaust passage, and a current-carrying-heating method using an electric heater set in a DPF.

Furthermore, in order to remove PM by burning even in a state where the exhaust gas temperature is comparatively low, a continuously regenerating type DPF is developed and proposed which is constituted by combining an oxidation catalyst or the like with the DPF. The DPF can remove the PM by burning at a comparatively low temperature. However, in a state where an exhaust gas temperature is low and clogging of the DPF progresses, exhaust gas temperature raising control such as an intake-air throttling is performed to temporarily raise the exhaust gas temperature in order to remove the collected PM by burning.

A NOx occlusion reduction type catalyst is one of the NOx purifying catalysts. This catalyst shows a NOx occlusion ability, and a NOx release and purification ability of depending on the O₂ (oxygen) concentration in the exhaust gas. In the NOx occlusion reduction type catalyst, a catalyst metal having an ability to oxidize NOx and a NOx occlusion material having an ability to occlude NOx are supported on a porous catalyst coat layer such as alumina (Al₂O₃). The catalyst metal is formed by platinum (Pt), palladium (Pd) and so on. The NOx occlusion material is formed by any one or several of alkaline metals, alkaline earth metals, rare earths and the like. As alkaline metals includes sodium (Na), potassium (K), cesium (Cs), and so on. The alkaline-earth metals include calcium (Ca), barium (Ba) and so on. The rare-earths include yttrium (Y), lanthanum (La) and so on.

First, in the case of an exhaust gas condition in which O₂ (oxygen) concentration in the exhaust gas is high (lean air-fuel ratio (air-fuel ratio) state) as in the normal operational state of a diesel engine, lean-burn gasoline engine, NO (nitrogen monoxide) is oxidized by O₂ contained in the exhaust gas as a result of the oxidizing ability of the catalyst metal to become NO₂ (nitrogen dioxide). Since the NO₂ is occluded by the NOx occlusion material in the form of nitrate, the exhaust gas is thus purified.

However, when this occlusion of the NOx continues, the NOx occlusion material such as barium is changed to nitrate. Accordingly, the NOx occlusion material is gradually saturated to lose the ability for occluding NOx. To avoid such situation, over-rich combustion is performed by changing operation conditions of the engine to generate the exhaust gas (rich spike gas) having a low O₂ concentration, high CO concentration, and high exhaust gas temperature and supply the exhaust gas to the catalyst.

In the rich/air ratio state of the exhaust gas, the NOx occlusion material changed to nitrate by occluding NO₂ releases the occluded NO₂ and returns to the original substance such as barium. Because O₂ is not present in this exhaust gas, the released NO₂ is reduced on the catalyst metal by using CO, HC, and H₂ in the exhaust gas as reducers. Thus, the NOx is converted into N₂, H₂ O, and CO₂, and purified.

The NOx occlusion reduction type catalyst has a problem in that sulfur (sulfur component) in fuel is accumulated in the NOx occlusion material, and the NOx purifying efficiency is deteriorated as the operation of the engine continues. Therefore, as disclosed in Japanese Patent Laid-Open No. 2000-192811, it is required to perform sulfur purge control (desulfurization control) by keeping the exhaust gas flowing into the catalyst in the condition of a high temperature and a rich air-fuel ratio atmosphere. Though different depending on the types of the catalyst to be used, the temperature of the exhaust gas is set higher than approximately 600°C to 650°C.

In the case of the sulfur purge control of a diesel engine, the rich air-fuel ratio state is realized by reducing the exhaust gas volume through intake-air throttling or through a large quantity of EGR as well as by a post injection or by directly adding light oil to an exhaust pipe. Sulfur purge is accelerated by bringing the exhaust gas into the rich air-fuel ratio state and raising the temperature of the catalyst by the oxidation activation reaction heat of the catalyst.

However, the sulfur purge for recovering the NOx occluding ability of the catalyst by increasing the sulfur purge quantity has the following problems.

Because the oxygen concentration in the exhaust gas is very low under a rich air-fuel ratio state, the time required to raise the temperature of the catalyst up to the temperature at which the sulfur purge can be realized becomes very long. Therefore, the fuel consumption amount during that time is increased, and the fuel efficiency is deteriorated. Moreover, the denser is an air-fuel ratio sate of the exhaust gas, the more a sulfur purge quantity increases. However, when performing such a dense rich air-fuel ratio state operation, there are problems that the fuel efficiency is extremely deteriorated, and that exhaust gas components such as HC, CO are generated in a large quantity. Moreover, when the oxygen concentration in exhaust gas becomes 0% at a high temperature, a problem occurs that hydrogen generated by a hydrogen generation reaction is combined with sulfur to change harmful hydrogen sulfide (H₂S).

The sulfur purge has the two problems; the first problem is to easily discharge purged sulfur in large quantity in an initial period of the sulfur purge control, and the second problem is one that a long time holding of the air-fuel ratio state of the exhaust gas in a stoichiometric air-fuel ratio state is difficult in the diesel engine.

Therefore, sulfur purge control sets a rich air-fuel ratio state when a catalyst temperature rises to a temperature at which sulfur separation can be made or higher. However, it is preferable to set the rich air-fuel ratio state in a minimum time.

### Brief summary of the Invention

It is an object of the present invention to provide an exhaust gas purifying method and an exhaust gas purifying system capable of efficiently purging the sulfur accumulated in a NOx occlusion reduction type catalyst while preventing the fuel efficiency from deteriorating and NOx, HC, and CO from being discharged into atmosphere, in an exhaust gas purifying system constituted by combining the NOx purifying ability of a NOx occlusion reduction type catalyst with the PM purifying ability of a DPF.

In order to achieve the above described object, the exhaust gas purifying method of the invention using an exhaust gas purifying system having a DPF and a NOx occlusion reduction type catalyst arranged in order from the upstream side in an exhaust passage of an engine, and the control means which is comprising an exhaust gas component detection means to detect the oxygen concentration and NOx concentration of the exhaust gas passing through the NOx occlusion reduction type catalyst, a DPF regeneration control means for controlling regeneration of the DPF, a NOx catalyst regeneration control means for recovering the NOx occlusion ability of the NOx occlusion reduction type catalyst, and a sulfur purge control means for controlling the sulfur purge of the NOx occlusion reduction type catalyst, wherein, when it is judged that both regeneration of the DPF and sulfur purge of the NOx occlusion reduction type catalyst are necessary, the DPF regeneration control for raising the temperature of the DPF is performed and the sulfur purge control to decrease the oxygen concentration in the exhaust gas flowing into the NOx occlusion reduction type catalyst is intermittently repeated.

This sulfur purge control is not set to the one-time period of sulfur purge control to be continued until the sulfur purge is completed. But the one-time period of the sulfur purge control is set to one several-th of the time required to complete the sulfur purge (e.g. 180 s to 300 s) or 2 s to 60 s and the short period sulfur purge is repeatedly performed until the sulfur purge is completed at predetermined time intervals (equal intervals or unequal intervals). It is allowed to set the predetermined time interval to a constant time. For example, it is allowed not to perform the sulfur purge control when the temperature of a NOx occlusion reduction type catalyst is equal to or lower than a predetermined temperature but to change the predetermined time interval in accordance with the temperature of the NOx occlusion reduction type catalyst when the temperature of it is higher than the predetermined temperature. It is possible to predetermine the one-time period of the sulfur purge by considering the conditions in which sulfur purge can be efficiently performed. These conditions are previously obtained through experiments and the like.

Thereby, it is avoided that a lot of sulfur is released and discharged at the beginning of sulfur purge control. Moreover, the time for a stoichiometric air-fuel ratio state which is difficult to keep for a long time in the case of a diesel engine, is decreased. Furthermore, it is possible to avoid a lot of sulfur from being temporarily produced in accordance with the intermittent sulfur purge control. Furthermore, the slip (discharge to atmospheric air) of HC, CO, H₂S and the deterioration of drivability are constrained.

Furthermore, it is preferable to determine the air-fuel ratio state of exhaust gas in the sulfur purge control in accordance with the air-fuel ratio state of the exhaust gas flowing into the NOx occlusion reduction type catalyst. It is assumed that the air-fuel ratio state of the exhaust gas is a rich air-fuel ratio or preferably, a stoichiometric air-fuel ratio (theoretical air-fuel ratio).

That is, in the sulfur purge control, the air-fuel ratio state of the exhaust gas flowing into the NOx occlusion reduction type catalyst is brought into a stoichiometric air-fuel ratio state.

Moreover, an exhaust gas purifying system for achieving the above described object having a DPF and a NOx occlusion reduction type catalyst arranged in order from the upstream side in an exhaust passage of an engine, and the control means which is comprised of an exhaust gas component detection means to detect the oxygen concentration and NOx concentration of the exhaust gas passing through the NOx occlusion reduction type catalyst, a DPF regeneration control means for controlling regeneration of the DPF, a NOx catalyst regeneration control means for recovering the NOx occlusion ability of the NOx occlusion reduction type catalyst, and a sulfur purge control means for controlling the sulfur purge of the NOx occlusion reduction type catalyst, wherein when it is judged that both regeneration of the DPF and sulfur purge of the NOx occlusion reduction type catalyst are necessary, the control means executes intermittently the sulfur purge control to decrease the oxygen concentration in the exhaust gas flowing into the NOx occlusion reduction type catalyst, performing DPF regeneration control for raising the temperature of the DPF.

The air-fuel ratio state of the exhaust gas flowing into the NOx occlusion reduction type catalyst is preferably brought into a stoichiometric air-fuel ratio state in the sulfur purge control.

According to an exhaust gas purifying method and an exhaust gas purifying system of the present invention, DPF regeneration according to forcible combustion of PM and sulfur purge of a NOx occlusion reduction type catalyst are simultaneously performed in an exhaust gas purifying system used by combining a DPF with a NOx occlusion reduction type catalyst. Therefore, it is possible to raise the temperature of the NOx occlusion reduction type catalyst by using the heat generated due to forcible combustion of the PM. Therefore, it is possible to minimize the deterioration of fuel efficiency.

Moreover, by intermittently repeating the sulfur purge control, it is possible to prevent a lot of sulfur from being released and discharged at the time of the sulfur purge control and eliminate the necessity for keeping the air-fuel ratio state of exhaust gas in a stoichiometric air-fuel ratio state for a long time.

Furthermore, because the sulfur purge control for bringing the air-fuel ratio state of exhaust gas into a stoichiometric air-fuel ratio state is intermittently performed, it is possible to efficiently perform sulfur purge while restraining slip (discharge to atmospheric air) of HC, CO, H₂S, and the like while preventing the drivability form deterioration.

### Brief Description of the Drawings

Fig.1 shows a constitution of an exhaust gas purifying system of an embodiment of the present invention;
Fig.2 shows a constitution of an exhaust gas purifying apparatus of the first embodiment of the present invention;
Fig.3 shows a constitution of an exhaust gas purifying apparatus of the second embodiment of the present invention;
Fig.4 shows a constitution of an exhaust gas purifying apparatus of the third embodiment of the present invention;
Fig.5 shows a constitution of an exhaust gas purifying apparatus of the fourth embodiment of the present invention;
Fig.6 shows a control flow for a sulfur purge of an exhaust gas purifying method of an embodiment of the present invention; and
Fig.7 shows a time series of the excess air factor, differential pressure between the front and the rear of a DPF, the temperature of a NOx occlusion reduction type catalyst converter, a NOx concentration, and a SO₂ concentration of an embodiment using a control flow for a sulfur purge of an exhaust gas purifying method of an embodiment of the present invention.

### Detailed Description of the Preferred Embodiment

An exhaust gas purifying method and an exhaust gas purifying systems of embodiments of the present invention are described below by referring to the accompanying drawings.

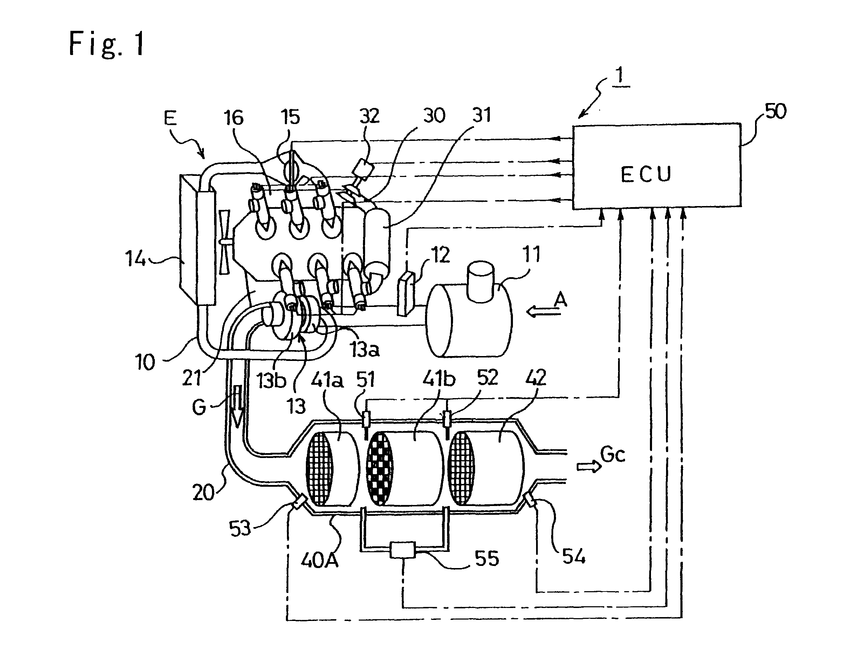

Fig.1 shows a constitution of the exhaust gas purifying system 1 of the embodiment. The exhaust gas purifying system 1 is constituted an exhaust gas purifying apparatus 40A constituted by arranging an oxidation catalyst (DOC) 41a, a DPF 41b, and a NOx occlusion reduction type catalyst converter 42 in order from the upstream side of an exhaust passage 20 in an engine (internal combustion engine) E. Moreover, a continuously regenerating type DPF 41 is constituted of the upstream-side oxidation catalyst 41a and the downstream-side DPF 41b.

The oxidation catalyst 41a is formed by a monolithic catalyst having a lot of polygonal cells made of structural material of cordierite, SiC (silicon carbide), or stainless steel. A catalyst coat layer occupying the surface area is present in inner walls of the cells to make the large surface support a catalyst metal such as platinum or vanadium and the ability of catalyst is generated. Thereby, it is possible to change NO in the exhaust gas to NO₂ by an oxidation reaction (N0+O→NO₂).

Moreover, the DPF 41b can be formed by a monolith-honeycomb wall-flow filter obtained by alternately sealing inlets and exits of porous-ceramic honeycomb channels or a felt-like filter obtained by laminating inorganic fibers of alumina or the like at random. Such filter collects the PM in the exhaust gas. By combining the PM with the upstream front-stage oxidation catalyst 41a, the collected PM is burned by NO₂ having a high oxidative power and removed.

The NOx occlusion reduction type catalyst converter 42 is formed by a monolithic catalyst similarly to the oxidation catalyst 41a. A catalyst coat layer is formed on the support body such as aluminum oxide or titanium oxide to make the catalyst coat layer support a noble metal such as platinum and a NOx occlusion material (NOx occlusion substance) such as barium.

The NOx occlusion reduction type catalyst converter 42 purifies the NOx in the exhaust gas by occluding the NOx in the exhaust gas when oxygen concentration in the exhaust gas state is high (lean air-fuel ratio state). The NOx occlusion reduction type catalyst converter 42 releases the occluded NOx and reduces the released NOx when oxygen concentration in the exhaust gas is low or zero (rich air-fuel ratio state). Thereby, it is prevented that NOx is discharged into the atmosphere.

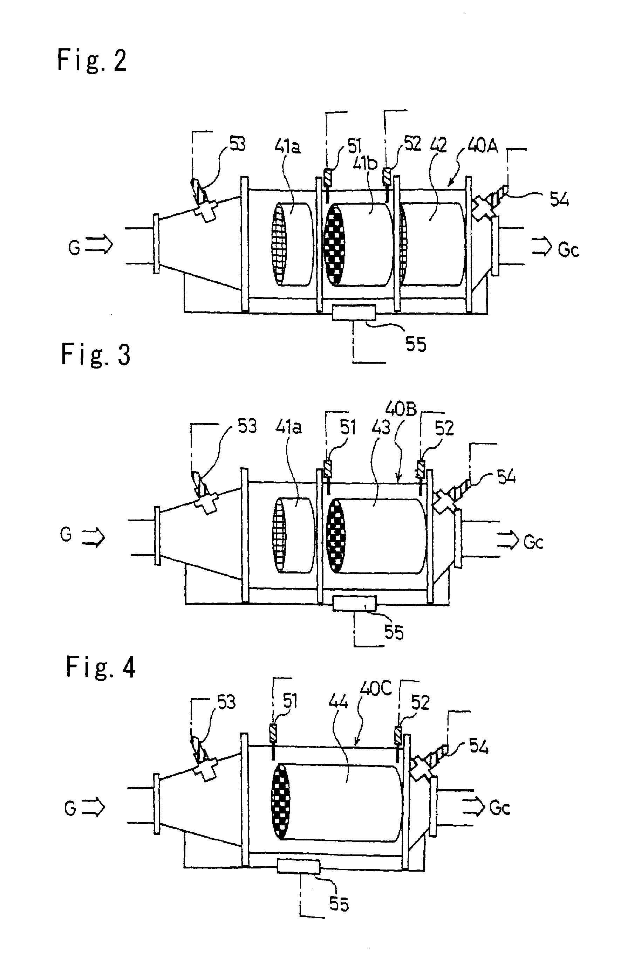

The first temperature sensor 51 and the second temperature sensor 52 are provided on the upstream side and the downstream side of the DPF 41b respectively. Furthermore, the fist exhaust gas concentration sensor 53 and the second exhaust gas concentration sensor 54 are provided on the front and the rear of the NOx occlusion reduction type catalyst converter 42, that is, nearby the inlet and the exit of the exhaust gas purifying apparatus 40A in Fig.1. The exhaust gas concentration sensors 53 and 54 are the integrator sensors in which a λ (excess air factor) sensor, a NOx concentration sensor, and O₂ concentration sensor are integrated. Moreover, to estimate a deposition quantity of PM, a differential pressure sensor 55 for detecting an exhaust differential pressure ΔP between the front and the rear of the DPF is provided with a conduction pipe connected to the front and the rear of the DPF 41b (Fig.1) or the front and the rear of the exhaust gas purifying apparatus 40A (Fig. 2).

Output values of these sensors are input to a control unit (ECU: engine control unit) 50 which performs the overall control of operations of the engine E and performs the regeneration control of the continuously regenerating type DPF 41 and the recovery control of the NOx purification capacity of the NOx occlusion reduction type catalyst converter 42. Moreover, a common-rail electronic-control fuel-injection system for fuel injection of the engine E, a throttle valve 15, an EGR valve 32, and the like are controlled depending on control signals output from the control unit 50.

The control unit 50 calculates a NOx purifying rate RNOx (=1.0-CNOx2/CNOx1) based on the values CNOx1 and CNOx2 detected by the first and second exhaust gas concentration sensors 53 and 54. Furthermore, the PM accumulation quantity of the DPF 41b is estimated based on the differential pressure ΔP detected by the differential pressure sensor 55 or the like.

In the exhaust gas purifying system 1, air A passes through an air cleaner 11 and a mass air flow (MAF) sensor 12, a compressor 13a of a turbocharger 13, an intercooler 14, and a throttle valve 15 in an intake passage 10 and enters into the cylinder of the engine through an intake manifold 16. The quantity of the air A is adjusted by a throttle valve 15.

Moreover, the exhaust gas G generated in the cylinder flows out from an exhaust manifold 21 and drives a turbine 13b of the turbocharger 13 in an exhaust passage 20. And the exhaust gas G passes through the exhaust gas purifying apparatus 40A and a not-illustrated silencer to discharge into the atmosphere. Then, the exhaust gas G becomes purified exhaust gas Gc in the exhaust gas purifying apparatus 40A.

Furthermore, some of the exhaust gas G passes through an EGR cooler 31 of an EGR passage 30 and an EGR valve 32 as ERG gas. This gas is re-circulated into the intake manifold 16. The quantity of EGR gas Ge is controlled by an EGR valve 32.

Fig.2 shows the exhaust gas purifying apparatus 40A. Figs.3 and 4 show constitutions of the exhaust gas purifying apparatuses 40B and 40C of other embodiments. The exhaust gas purifying apparatus 40B in Fig.3 is constituted of the oxidation catalyst 41a and the DPF 43 supporting a NOx occlusion reduction type catalyst. The exhaust gas purifying apparatus 40C in Fig.4 is constituted of the oxidation catalyst 41a and the DPF with the catalyst 44 supporting the NOx occlusion reduction type catalyst. The DPF with the catalyst includes the DPF supporting an oxidation catalyst and the DPF supporting an oxidation catalyst and the PM oxidation catalyst.

The PM oxidation catalyst is made of the oxide of cerium (Ce) or the like. In the case of the catalyst-carrying filter carrying both of the PM oxidation catalyst and the oxidation catalyst, PM is oxidized depending on a reaction (4CeO₂+ C→2Ce₂O₃ + CO₂ , 2Ce₂O₃ + O₂→4CeO₂ , or the like) using O₂ in the exhaust gas in the catalyst-carrying filter at a low temperature (between 300°C and 600°C). The PM is oxidized by O₂ in the exhaust gas at a temperature higher than the temperature (600°C or higher) at which the PM is burned by O₂ in the exhaust gas.

Moreover, there are apparatuses as an exhaust gas purifying apparatus having no oxidation catalyst at the most upstream side, such as the exhaust gas purifying apparatus constituted of a DPF not having a catalyst but having only a filter and a NOx occlusion reduction type catalyst converter; the exhaust gas purifying apparatus constituted of a DPF with a catalyst carrying an oxidation catalyst and a NOx occlusion reduction type catalyst converter; and the exhaust gas purifying apparatus DPF with a catalyst supporting both an oxidation catalyst and a PM oxidation catalyst and a NOx occlusion reduction type catalyst converter.

In short, any exhaust gas purifying apparatus may be used as the exhaust gas purifying apparatus of the present invention as long as the apparatus performs NOx purification by the NOx occlusion reduction type catalyst and PM purification by the DPF to the exhaust gas of the engine.

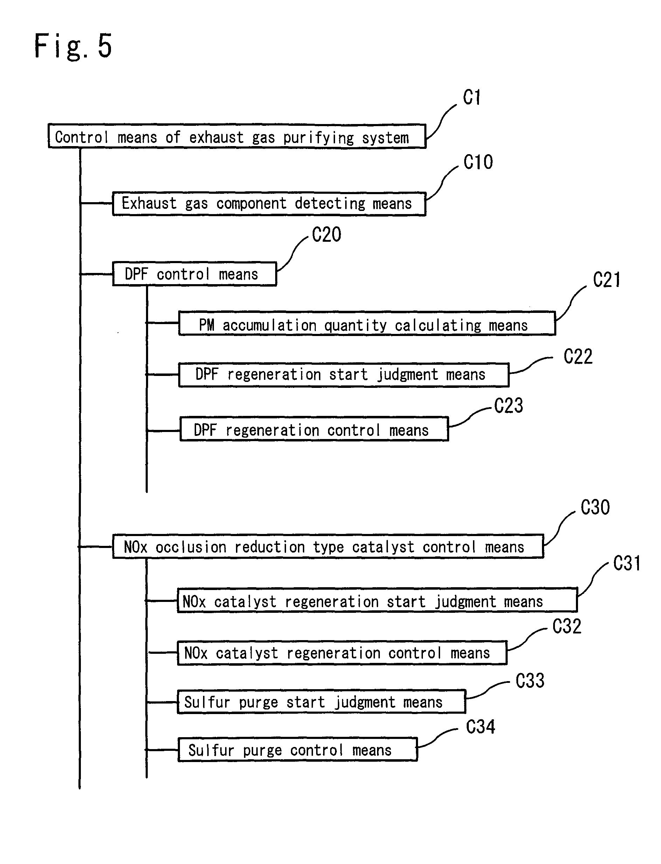

Moreover, the control unit of the exhaust gas purifying system 1 is built in the control unit 50 of the engine E. The control unit 50 controls operations of the engine E and the exhaust gas purifying system 1. As shown in Fig.5, the control unit of the exhaust gas purifying system 1 is constituted of a control means C1 of the exhaust gas purifying system having an exhaust gas component detecting means C10, a DPF control means C20, and a NOx occlusion reduction type catalyst control means C30.

The exhaust gas component detecting means C10 is a means for detecting the oxygen concentration (or excess air factor λ) and the NOx concentration in the exhaust gas and is constituted of the first and second exhaust gas concentration sensors 53 and 54.

The DPF control means C20 is constituted of a PM accumulation quantity calculating means C21, a DPF regeneration start judgment means C22, and a DPF regeneration control means C23.

In the DPF control means C20, is performed the following. The PM accumulation quantity calculating means C21 calculates the PM accumulation quantity of the DPF 41b based on the differential pressure ΔP detected by the differential pressure sensor 55, or the like. The DPF regeneration start judgment means C22 judges whether the clogging state of the DPF 41b exceeds a predetermined clogging state depending on whether the PM accumulation quantity exceeds a predetermined determination value. When DPF regeneration start is judged, the DPF regeneration control means C23 raises an exhaust gas temperature through post injection, EGR control, and the like, and the DPF 41 is regenerated.

The NOx occlusion reduction type catalyst control means C30 is a means for regenerating the NOx occlusion reduction type catalyst converter 42 and controlling a sulfur purge and is constituted of a regeneration start judgment means of NOx catalyst C31, a NOx catalyst regeneration control means C32, a sulfur purge start judgment means C33, and a sulfur purge control means C34.

The NOx occlusion reduction type catalyst control means C30 calculates a NOx purification rate RNOx based on the NOx concentration detected by the exhaust gas component detecting means C10. Moreover, when the NOx purification rate RNOx becomes lower than a predetermined determination value, the means C30 judges that regeneration of the NOx catalyst is started. An exhaust gas state is brought into a predetermined rich air-fuel ratio state and a predetermined temperature range (between approximately 200°C and 600°C though depending on a catalyst) by performing post injection in the fuel injection control of the engine E, EGR control, and intake-air throttling control by the NOx catalyst regeneration control means C32. Thereby, the NOx purification capacity, that is, the NOx occlusion capacity is recovered and the NOx catalyst is regenerated. Moreover, the sulfur purge is performed by the sulfur purge start judgment means C33 and the sulfur purge control means C34.

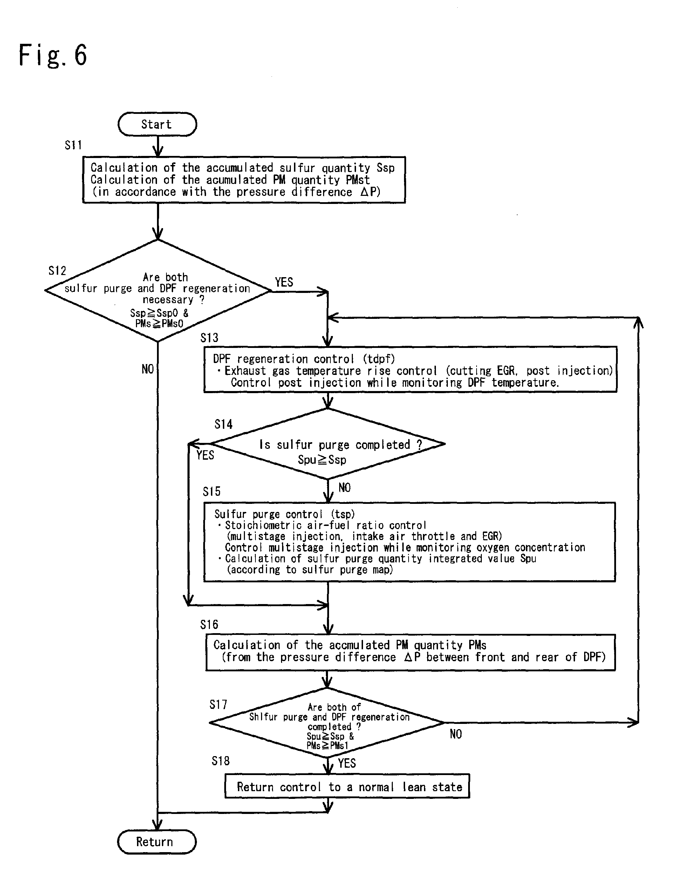

In such exhaust gas purifying system 1, the exhaust gas purifying method of NOx occlusion reduction type catalyst of the present invention is performed in accordance with the sulfur purge control flow shown in Fig.6.

The control flow shown in Fig.6 is a control flow relating to the sulfur purge of the NOx occlusion reduction type catalyst. The control flow is shown as a flow for being repeatedly called from the control flow of the whole exhaust gas purifying system together with the control flow relating to the regeneration of the NOx occlusion capacity of the NOx occlusion reduction type catalyst converter 42 or the regeneration control flow of the DPF 41b, or the like. The above control flow is performed for judging the necessity of the sulfur purge and the DPF regeneration, and if required, the sulfur purge control is intermittently performed at the same time as the regeneration control of the DPF.

When this control flow starts, the sulfur quantity occluded in the catalyst 42 is calculated in accordance with the fuel consumption and the sulfur quantity contained in fuel by the sulfur purge start judgment means C33 and integrated to calculate an accumulated sulfur quantity Ssp. Moreover, the accumulated PM quantity PMst of the DPF 41b is calculated in accordance with the pressure difference ΔP detected by the PM accumulation quantity calculating means C21.

Then, in the next step S12, it is judged by the sulfur purge start judgment means C33 whether sulfur purge is necessary. In the case of this judgment, it is judged that sulfur purge is necessary when the accumulated sulfur quantity Ssp becomes larger than a predetermined limit value Sso0.

Moreover, in step S12, it is judged by the DPF regeneration start judgment means C22 whether DPF regeneration is necessary. In the case of this judgment, when the accumulated PM quantity PMs becomes larger than the predetermined judgment value PMs0 for regeneration start, it is judged that DPF regeneration is necessary.

When it is judged in this step S12 that sulfur purge is not necessary or that DPF regeneration is not necessary, the DPF regeneration control or sulfur purge control is not performed and return is performed.

Moreover, when it is judged that sulfur purge is necessary and DPF regeneration is also necessary, step S13 is started.

In the case of the exhaust gas temperature raising control for regenerating the DPF in step S13, the exhaust gas temperature is raised by performing post injection in accordance with the fuel injection of an engine or cutting EGR and control is performed so that the exhaust gas temperature flowing into the DPF 41b enters a PM self-ignition region and temperature region free from abnormal combustion (approx. 500°C). In this temperature control, feedback control is performed so that the temperature of exhaust gas flowing into the NOx occlusion reduction type catalyst converter 42 becomes a temperature capable of performing sulfur purge (approx. 600°C to 650°C) or higher while monitoring the temperature detected by the temperature sensor 52 and adjusting the fuel quantity of post injection.

The PM accumulated in the DPF 41b is forcibly burned and removed in accordance with the exhaust gas temperature rise. Moreover, temperatures of the DPF 41b, the exhaust gas, and NOx occlusion reduction type catalyst converter 42 are raised by the combustion heat of the PM and the oxygen concentration of the exhaust gas passing through the DPF 41b is decreased.

Furthermore, after performing the DPF regeneration control in this step S13 for a predetermined time tdpf (e.g. 10 min to 15 min), it is judged in step S14 whether sulfur purge is completed. When the sulfur purge is not completed in this judgment, step S15 is started to perform the sulfur purge control but when the sulfur purge is completed, step S16 is started.

Whether the sulfur purge is completed in step S14 is judged in accordance with whether a sulfur purge quantity integrated value Spu calculated in the next step S15 exceeds an accumulated sulfur quantity Ssp calculated in step S11 (or predetermined limit value Ssp0). The sulfur purge quantity integrated value Spu is set to zero as an initial value in step S11 or calculated in the following step S15. Moreover, when the sulfur purge quantity integrated value Spu exceeds the accumulated sulfur value Ssp (or predetermined limit value Ssp0), it is judged that sulfur purge is completed and step S16 is started without performing the sulfur purge control in the next step S15.

Then, the sulfur purge control in step S15 performs feedback control of multistage injection including pilot injection and post injection so that a predetermined oxygen concentration (or excessive air rate λ) is obtained by monitoring an oxygen concentration (or excessive air rate λ) while controlling post injection, intake air throttle, and EGR. The oxygen concentration (or excessive air rate λ) is an oxygen concentration (or excessive air rate λ) of exhaust gas flowing into the NOx occlusion reduction type catalyst converter 42, which is a value detected by a second exhaust gas concentration sensor 54. The oxygen concentration (or excessive air rate λ) of the control target is assumed as a rich air-fuel ratio, preferably as a stoichiometric air-fuel ratio (theoretical air-fuel ratio). The air-fuel ratio state of the exhaust gas flowing into the NOx occlusion reduction type catalyst converter 42 is brought into a rich air-fuel ratio state, preferably to a stoichiometric air-fuel ratio state by the air-fuel ratio control to efficiently perform sulfur purge.

In the case of the air-fuel ratio control, oxygen is consumed by oxidizing HC and CO by an upstream-side oxidation catalyst 41a or PM by the DPF 41b. Therefore, it is not necessary to realize a complete rich air-fuel ratio or complete stoichiometric air-fuel ratio immediately after an exhaust manifold 21 of an engine E. That is, even if the excessive air ratio λ is a shallow rich state of 1.01 to 1.02, it is possible to bring the NOx occlusion reduction type catalyst converter 42 into a rich atmosphere or stoichiometric atmosphere in which sulfur can be purged. Therefore, it is only necessary to perform control so that the oxygen concentration (or excessive air rate λ) detected by a second exhaust gas concentration sensor 54 closest to the upstream side of the NOx occlusion reduction type catalyst converter 42 becomes a rich air-fuel ratio, preferably a stoichiometric air-fuel ratio. Thereby, it is possible to restrain deterioration of fuel efficiency, discharge quantity of HC or CO to the atmospheric air, drivability (ride quality), and the like.

After performing the sulfur purge control for a predetermined time tsp, the sulfur purge quantity integrated value Spu is calculated from a previously input sulfur purge quantity map and the like in accordance with a catalyst temperature Ts calculated from temperatures detected by the first and second temperature sensors 51 and 52, and engine speed Ne showing an operation state and load Q of an engine. The catalyst temperature Ts is calculated from temperatures detected by the first and second temperature sensors 51 and 52. The sulfur purge quantity map is brought into map data so that a sulfur purge quantity can be calculated from the engine speed Ne and load Q by using the catalyst temperature Ts and the like as a parameter. The sulfur purge quantity map is determined by experimentally obtaining the sulfur purge quantity for unit time by using catalyst temperature, time, space speed (exhaust gas flow rate), and S/V ratio as parameters and putting the data in order.

The predetermined time tsp for performing the sulfur purge control is set to one several-th of the time required to complete sulfur purge (such as 180 s to 300 s) or 2 s to 60 s. Thereby, it is possible to prevent a lot of sulfur from being purged and discharged at the beginning of the sulfur purge control. Moreover, in the case of a diesel engine, it is possible to decrease the time for the stoichiometric air-fuel ratio state which is difficult to keep for a long time. The predetermined time tsp is a value set earlier than the control, which is obtained from a condition in which sulfur purge can be efficiently performed previously obtained from experiments.

In the next step S16, the accumulated PM quantity PMs of the DPF 41b is calculated from the pressure difference ΔP detected by a pressure difference sensor 55 and the like. Then, in the next step S17, it is judged whether sulfur purge and DPF regeneration are completed. This judgment is performed in accordance with whether the sulfur purge quantity integrated value Spu exceeds the accumulated sulfur quantity Ssp (or predetermined limit value Ssp0) and whether the accumulated PM quantity PMs becomes equal to or less than a predetermined judgment value PMs1 for completing regeneration.

When it is judged that neither sulfur purge nor DPF regeneration is completed, step S13 is restarted but when it is judged that sulfur purge and DPF regeneration are both completed, return is performed.

Therefore, steps S13 to S17 are repeated until both sulfur purge and DPF regeneration are completed. When the both are completed, step S18 is started. In step S18, return control to a normal lean state is performed and return is performed after the return control.

According to the exhaust gas purifying method and exhaust gas purifying system 1 having the above configuration, regeneration of the DPF 41b according to forcible combustion of PM and sulfur purge of the NOx occlusion reduction type catalyst 42 are simultaneously performed. Therefore, because the temperature of the NOx occlusion reduction type catalyst can be raised by using the heat produced due to the forcible combustion of the PM. It is possible to minimize deterioration of fuel efficiency.

Moreover, by intermittently repeating sulfur purge control, it is possible to prevent a lot of sulfur from being purged and discharged at the time of the sulfur purge control. Furthermore, it is not necessary to keep the air-fuel ratio state of exhaust gas in a rich air-fuel ratio state or stoichiometric air-fuel ratio state for a long time.

Furthermore, because the sulfur purge control for bringing the air-fuel ratio state of exhaust gas into a rich air-fuel ratio state or stoichiometric air-fuel ratio state is intermittently performed, it is possible to efficiently perform sulfur purge while restraining deterioration of slip of HC, CO, H₂S, and the like and drivability.

Furthermore, by bringing the air-fuel ratio state of exhaust gas into a stoichiometric air-fuel ratio state, the above advantage can be further exhibited.

### [Embodiments]

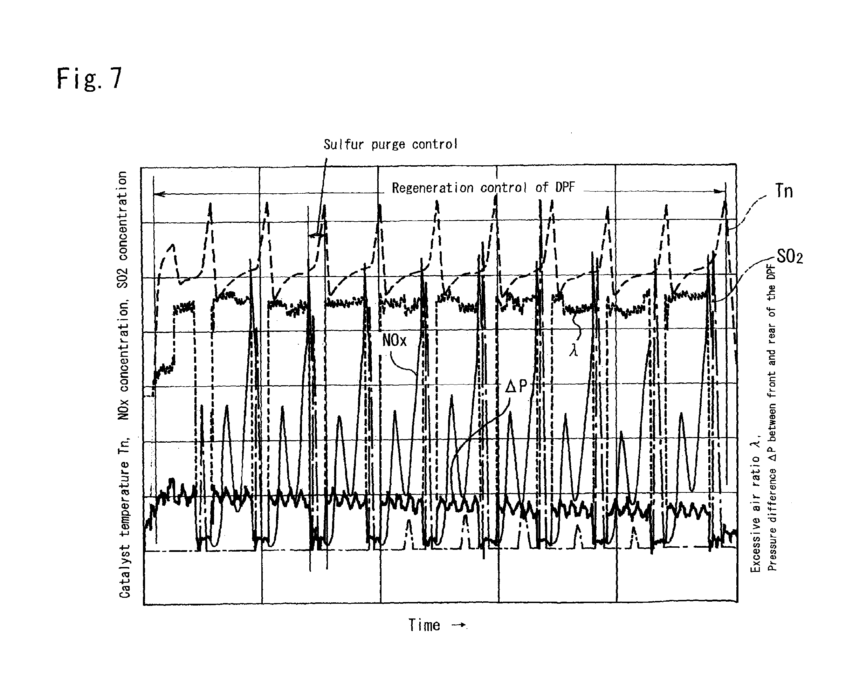

Fig.7 shows the excessive air rate λ, pressure difference ΔP between front and rear of a DPF, catalyst temperature (bed temperature of NOx occlusion reduction type catalyst converter) Tn, and concentrations of NOx and SO₂ at the downstream side of an exhaust gas purifying system when performing sulfur purge in accordance with the control flow shown in Fig.6 by using the exhaust gas purifying system shown in Fig.2.

According to Fig.6, by intermittently repeating the sulfur purge control for decreasing the excessive air rate λ immediately before a NOx occlusion reduction type catalyst converter to 1.01 to 1.02 while performing the regeneration control of a DPF, it is found that the catalyst temperature Tn rises at the time of the sulfur purge control and SO₂ is discharged. Moreover, the quantity of the SO₂ to be discharged at one time is decreased because the sulfur purge control is kept for a short time.

Furthermore, because the pressure difference ΔP between front and rear of the DPF is lowered, it is found that combustion of PM is progressed. In Fig.6, the sulfur purge control is performed for 1 min after a 3 min stop period and this cycle is repeated. Furthermore, in the range of Fig.6, neither sulfur purge nor DPF regeneration is completed.

## Claims

1. An exhaust gas purifying method using an exhaust gas purifying system having a DPF and an NOx occlusion reduction type catalyst in order from the upstream side in an exhaust passage of an engine and a control means;
said control means comprising;
an exhaust gas component detection means to detect the oxygen concentration and NOx concentration of the exhaust gas passing through the NOx occlusion reduction type catalyst;
a DPF regeneration control means for controlling regeneration of the DPF;
a NOx catalyst regeneration control means for recovering the NOx occlusion ability of the NOx occlusion reduction type catalyst; and
a sulfur purge control means for controlling the sulfur purge of the NOx occlusion reduction type catalyst;
wherein, when it is judged that both regeneration of the DPF and sulfur purge of the NOx occlusion reduction type catalyst are necessary,
the DPF regeneration control for raising the temperature of the DPF is performed and
the sulfur purge control to decrease the oxygen concentration in the exhaust gas flowing into the NOx occlusion reduction type catalyst is intermittently repeated.

2. The exhaust gas purifying method according to claim 1, wherein
the air-fuel ratio state of the exhaust gas flowing into the NOx occlusion reduction type catalyst is brought into a stoichiometric air-fuel ratio state in the sulfur purge control.

3. An exhaust gas purifying system having a DPF and a NOx occlusion reduction arranged in order from the upstream side in an exhaust passage of an engine, and a control means;
said control means comprising;
an exhaust gas component detection means to detect the oxygen concentration and NOx concentration of the exhaust gas passing through the NOx occlusion reduction type catalyst:
a DPF regeneration control means for controlling regeneration of the DPF;
a NOx catalyst regeneration control means for recovering the NOx occlusion ability of the NOx occlusion reduction type catalyst; and
a sulfur purge control means for controlling the sulfur purge of the NOx occlusion reduction type catalyst;
wherein when it is judged that both regeneration of the DPF and sulfur purge of the NOx occlusion reduction type catalyst are necessary,
said control means performs the DPF regeneration control for raising the temperature of the DPF and executes intermittently the sulfur purge control to decrease the oxygen concentration in the exhaust gas flowing into the NOx occlusion reduction type catalyst,.

4. The exhaust gas purifying system according to claim 3, wherein
the air-fuel ratio state of the exhaust gas flowing into the NOx occlusion reduction type catalyst is brought into a stoichiometric air-fuel ratio state in the sulfur purge control.
